# EUROPEAN PATENT APPLICATION

(11) **EP 2 979 847 A1**
(43) Date of publication of application: **03.02.2016**
(21) Application number: 15175580.8
(22) Date of filing: 07.07.2015
(51) Int. Cl.: B29C 65/02, F16B 37/06, B29C 65/06, B29C 65/08, B29C 65/36, B29K 101/12

(54) **FASTENING ELEMENT AND THERMOPLASTIC JOINING METHOD**

(30) Priority: 31.07.2014 DE 102014110913
(71) Applicant: Newfrey LLC, Newark, Delaware 19711 (US)
(72) Inventor: SALTENBERGER, Reimar, 35394 Giessen (DE)
(74) Representative: Witte, Weller & Partner Patentanwälte mbB

(57) **Abstract**

Fastening element (10) which is joinable, in particular is thermoplastically weldable, onto a surface (41) of a workpiece (40), said fastening element having a fastening portion (12) for fastening an object and having a joining portion (14) for joining the fastening element (10) onto the workpiece surface (41), wherein the joining portion (14) comprises a joining axis (16) and a joining surface (20) which is aligned transversely hereto and can be placed onto the workpiece surface (41) for joining. In this case, the joining surface (20) comprises at least one support portion (22) which juts out in relation to a base plane (24) which extends transversely with respect to the joining axis (16) such that the support portion (22) is able to contact the workpiece surface (41) when placed in position, and wherein the joining surface (20) comprises at least one radial channel (30) which is realized for the purpose of guiding fluid in the radial direction (32) during the joining operation. (Fig. 3)

## Description

The present invention relates to a fastening element which is joinable, in particular is thermoplastically weldable, onto a surface of a workpiece, said fastening element having a fastening portion for fastening an object and having a joining portion for joining the fastening element onto the workpiece surface, wherein the joining portion comprises a joining axis and a joining surface which is aligned transversely hereto and can be placed onto the workpiece surface for joining.

In addition, the present invention relates to method for joining a fastening element onto a workpiece, wherein the fastening element and/or the workpiece are produced at least in portions from a thermoplastic plastics material which is heated during the joining process, wherein the fastening element is pressed against the workpiece during the joining process.

The technology of joining thermoplastic fastening elements onto thermoplastic workpieces is known in general. In this connection, the joining surface of the fastening element and/or an associated joining surface of the workpiece is heated such that the thermoplastic plastics material fuses. The joining partners are then pressed against one another and the heating process is terminated such that the molten mass solidifies. Positively bonded connections between joining partners of the abovementioned type are able to be produced in this way.

These types of methods are used, in particular, in the area of motor vehicle body construction. In this area, fastening elements of the above-described type serve, for example, as anchors for fastening tasks in order to secure, for example, lines, panels, coverings etc. with reference to a workpiece which can be, for example, a body portion, a panel part, a bumper or the like.

The strength and durability of the joint produced in this manner depends crucially on whether bubbles have formed in the molten joining zone. A further important parameter for the quality of such joints is whether the fastening element is aligned perpendicular to the workpiece. In other words, it must be checked whether the joining surfaces of the joining partners have been aligned substantially parallel during the joining process or not. Any skewed positions can also lead to faults or weak points in the joint.

To solve said problem, it is known, on the one hand, to clamp the fastening elements in very rigid holding devices whilst the joining process is being carried out in order to ensure the alignment with the joining axis. In addition, it is known in the case of thermoplastic welding methods of this type to avoid inclusions of air by moving the two joining partners relative to one another during the joining process. This applies in particular to welding technologies such as friction welding, torsion welding and ultrasound welding.

In the case of so-called butt-end (hot element) welding, welding is effected in the majority of cases over the entire surface. A division of the joining surface is only possible in part. Access restrictions are produced as a result of the welding equipment. In addition, it is imperative for the joining zones to be realized in an even manner.

In the case of vibration welding, a translatory or rotational relative movement of the joining partners with respect to one another is necessary in order to generate the frictional heat. Even joining surfaces are necessary in this case also. In the case of the joining process, small particles can be created which can impair the function of further components. In addition, high pressing forces are necessary in order to generate the necessary frictional heat.

In the case of ultrasound or torsion welding, small particles can also be generated from the joining zone. In this case too, even joining surfaces and high pressing forces are necessary. In addition, an energy direction sensor is necessary and delicate components can be damaged or destroyed by vibrations. The same applies in the case rotation welding, the joining zone additionally having to be rotationally symmetrical in this case.

Against the above background, it is an object the invention to provide an improved fastening element as well as an improved thermoplastic joining method, at least one of the above-mentioned disadvantages preferably being avoided.

The above object is achieved in the case of the fastening element mentioned in the introduction in that the joining surface comprises at least one support portion which juts out in relation to a base plane which extends transversely with respect to the joining axis such that the support portion is able to contact the workpiece surface when placed in position, and wherein the joining surface comprises at least one radial channel which is realized for the purpose of guiding fluid in the radial direction during the joining operation.

The above object is additionally achieved by a method for joining a fastening element onto a workpiece, wherein the fastening element and/or the workpiece are produced at least in portions from a thermoplastic plastics material which is heated during the joining process, wherein the fastening element is a fastening element of the type according to the invention which is pressed against the workpiece during the joining process.

As a result of the measure of providing a support portion which juts out in relation to a base plane of the joining surface, it is possible to achieve more secure positioning of the fastening element with reference to the workpiece surface. As a result of the measure of realizing a radial channel on the joining surface, it is possible to achieve that fluid, such as air and/or an air/substance mixture, and/or a fluid substance is guided in the radial direction. Said measure makes it possible, as a consequence, to avoid inclusions of air in the region of the joining surface during the joining operation, even if a relative radial movement of the two joining partners in a direction transversely with respect to the joining axis is not effected. Said measures can be advantageous in the case of thermoplastic welding, but also in the case of bonding, metal welding or the like.

The method according to the invention is accordingly preferably carried out without there being a radial relative movement between the joining partners. It is not imperative for the geometry of the joining zone to be even or rotationally symmetrical.

The joining equipment necessary for carrying out the joining method can be realized in a compact manner such that the method is also able to be carried out where there is restricted accessibility. In other words, the joining method can be used almost everywhere where plastic material elements, such as fastening elements, are to be attached on plastics material components, such as workpieces. In general, the method is applicable to every type of thermoplastic connection where two joining partners are to be connected together at a joining zone.

The term of fastening element and the term of workpiece are consequently to be understood broadly in each case in the present context. The fastening portion of the fastening element can be an arbitrary portion which does not assume any further fastening task, however it can also be a fastening portion which is realized especially for fastening an object on the workpiece.

The support portion can be arranged centrally with reference to the joining surface, but is preferably arranged in an eccentric manner. In the latter case, the number of support potions is preferably at least two.

The radial channel can be realized as an indentation in the joining surface, but can also be formed by radial webs which jut out in relation to the base plane. These types of radial webs can be aligned, for example, with a respective support portion such that fluid is guided past the support portion in the radial direction.

The object is consequently completely achieved.

According to a particularly preferred embodiment, the support portion comprises at least three support regions which are arranged distributed over a periphery of the joining surface.

As a result, it is possible to obtain clear positioning of the fastening element with reference to the workpiece when the support regions are placed onto the workpiece surface. Accordingly, holding devices for the fastening element and/or for the workpiece do not have to be realized in a particularly rigid manner. Rather, a clear relationship and alignment with reference to the joining axis can be realized as a result of the support portions.

The support regions can be realized as support points, or as support surfaces. In addition, it is possible to realize the support regions as support lines. The support regions are generally aligned in a plane transversely or perpendicularly to the joining axis and in each case preferably form a contact surface. The ratio between the entire contact surface of all the support portions and the joining surface can be less than 1/10, in particular less than 1/50.

According to a further preferred embodiment, it is provided that a cross section of the radial channel, when viewed in a radial direction, expands such that fluid is able to flow in said radial direction when the fastening element and the workpiece are pressed together.

The radial direction, in this case, can be a direction that is directed outward away from a joining axis, but can also be directed radially inward, for example in the case of a ring-shaped joining surface.

As a result of the cross section expansion, it can be achieved that when the fastening element and the workpiece are pressed together, initially those surface portions of the joining surface and of the associated workpiece surface meet from which air or other inclusions of fluid are to be pressed out. As a result of pressing the fastening element and the workpiece together further, said fluid (air or another inclusion) can then be displaced outward in the radial direction a little at a time such that in the final relative axial position of the fastening element and the workpiece, inclusions of air are generally displaced out of the region of the joining surface.

According to a further preferred embodiment, the joining surface is a circular surface which comprises a central portion which lies at an axial height as the support portion or which is set back axially in relation to the support portion.

In a variant, in this case, the central portion can form part of the support portion, in particular when it lies at the same axial height as the support portion.

In a preferred embodiment, the central portion is set back axially by an unevenness dimension in relation to the support portion.

Said development makes it possible, when the fastening element is placed onto the workpiece, that solely the contact between the support portion or the support regions thereof and the surface of the workpiece is crucial to the relative position between the fastening element and the workpiece. In other words, this ensures that the central portion does not contribute to the positioning of the fastening element on the workpiece at all before the heating process during the joining method is begun.

On the other hand, said measure ensures that when said fastening element is placed into position, no air can be enclosed between the central portion, which can be aligned, for example, parallel to the base plane, and the workpiece surface which air could weaken the joint produced subsequently. Rather, any air that is present is displaced radially outward up to the outside portion of the joining surface proceeding from the central portion in the radial direction.

In the case of a joining surface in the form of a circular surface, the displacing of fluid is generally effected outward in the radial direction, that is away from the joining axis.

In an alternative embodiment, the joining surface is a ring-shaped surface.

In the case of said variant, the radial direction can also be an inwardly directed direction in such a manner that air is displaced radially inward into the region of a recess of the ring-shaped surface.

The radial channel can assume an arbitrary form in cross section, for example when viewed in the peripheral direction, it can be realized in the manner of a toothing. When viewed in the radial direction, the form of the radial channel can consequently be angular, in particular step-shaped or polygonal.

However, it is especially preferred when the radial channel is wave-shaped at least in portions in the peripheral direction.

In the case of said development, the joining surface is generally preferably realized such that it is continous and differentiable at least in that region from which fluid is displaced. In other words, the achievement of the wave form is that no edges or corners are formed in which air could be collected.

Where the radial channel has such a wave form, it is preferred when the entire joining surface extends in a wave-shaped manner in such a manner that wave peaks form at least parts of support regions, and on the other hand, wave troughs form radial channels.

The number of radial channels is preferably three, four or five. In a corresponding manner, it is provided in this connection that the number of support regions is three, four or five.

All in all, it is advantageous when the joining surface comprises an outside diameter, wherein the radial channel comprises an axial depth, and wherein a ratio of the axial depth of the radial channel to the diameter of the joining surface is less than 0.1, in particular less than 0.05.

Finally, it is all in all advantageous when the fastening element is produced at least in the region of the joining portion from a plastics material, a thermoplastic plastics material.

On the whole, as an alternative to this or in addition to it, the invention can be also described as follows. If, in the prior art, two joining components with respective joining zones are pressed against one another during a thermoplastic fusing process, inclusions of air can occur as a result of unevenness on the joining surfaces due to manufacturing tolerances. Greater unevenness, due to forming geometries and/or surface structures, can result in further inclusions of air or in a skewed position of the joining partners. This can have a negative influence on the functioning of the components and on the holding forces of the joint. Realizing the joining zone in a conical, wave-shaped manner can preferably ensure that the air is conveyed from the centre out of the joining zone through the cone (where required, also toward the centre with corresponding possibility for ventilation). This enables a homogeneous joining zone. As a result of preferably at least three support portions or support regions, which can be realized in a punctiform, linear or surface-shaped manner, a secure and preferably perpendicular alignment of the fastening element or of the workpiece with reference to the joining axis can be ensured. The support portions can be formed by portions of the wave form. During the continuous heating of the joining zone, which is preferably effected by induction, the joining zone is plasticized and pressed onto the joining partner which preferably also plasticizes inside the contact surface as a result of thermal conduction and is connected to the joining element (fastening element). As a result of the conicity, the air is conveyed further and further radially outward during the fusing of the joining zone.

It is obvious that the features named above and the features yet to be explained below can be used not only in the respectively specified combination, but also in other combinations or standing alone without departing from the framework of the present invention.

Exemplary embodiments of the invention are shown in the drawing and are explained in more detail in the following description, in which:
- Fig. 1: shows a top view of a joining surface of a fastening element according to one embodiment of the present invention;
- Fig. 2: shows a sectional view along the line II-II of Fig. 1;
- Fig. 3: shows a sectional view along the line III-III of Fig. 1;
- Fig. 4: shows a representation, which is comparable to Fig. 1, of a joining surface of a further embodiment of a fastening element according to the invention;
- Fig. 5: shows a side view of the fastening element of Fig. 4; and
- Fig. 6: shows a sectional view along the line VI-VI of Fig. 5.

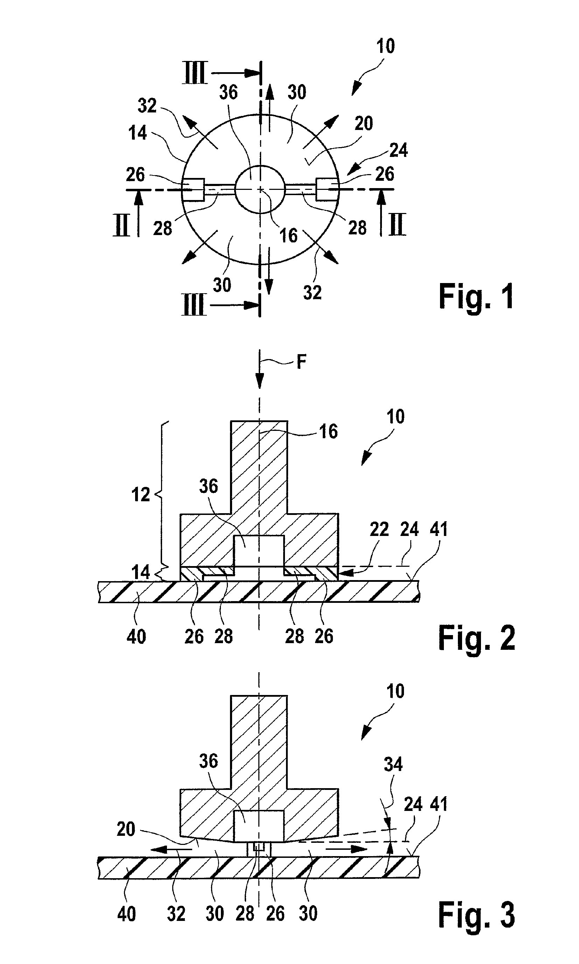

A first embodiment of a fastening element is shown schematically in Figs. 1 to 3 and is given the general reference of 10. The fastening element 10 includes a fastening portion 12 which can be realized in a substantially shank-shaped or bolt-shaped manner, as is shown in Figs. 2 and 3. However, other developments of the fastening portion 12 are easily possible. The fastening element 10 includes, in addition, a joining portion 14, by means of which the fastening element 10 is able to be joined on a workpiece. A joining axis 16, along which such a joining operation is able to be carried out, can be seen in particular in Fig. 2.

The fastening element 10 is produced from a thermoplastic plastics material at least in the region of the joining portion 14. Inductively heatable metal inserts, in the form of plates, finely distributed particles or the like, can be incorporated into the joining portion 14 in order to be able to heat the joining portion 14 inductively to a temperature at which the joining portion 14 melts. As an alternative to this, it is possible to incorporate an electric coil arrangement or the like in the joining portion 14 for this purpose. It is also conceivable to heat the joining portion 14 by other means, for example from externally before the joining process is carried out.

The joining portion 14 includes a joining surface 20. The joining surface 20 can, as shown, be realized as a ring-shaped surface, but can also be realized as a circular surface or as a polygonal surface, an irregular surface or the like. The joining surface 20 includes a support portion 22 which juts out in the axial direction in relation to a base plane 24. The base plane 24 is preferably aligned perpendicularly to the joining axis 16.

The support portion 22 is that portion by way of which the joining surface 20 can be placed onto a workpiece. The support portion 22 includes, in the present case, two diametrically opposite support regions 26 which are each realized as small surfaces. As an alternative to this, the support portion 22 can also comprise just one support region 26, however it preferably comprises three support regions 26 which are arranged distributed over the periphery of the joining surface 20. The support regions 26 are realized as contact surfaces for a workpiece in order to move the fastening element 10 in a simple manner into a defined position with reference to the workpiece such that the joining axis 16 is able to be aligned in a suitable manner.

Two radial webs 28, which coincide with the support regions 26 in the radial direction, are realized additionally on the joining surface 20. When viewed in the peripheral direction, two radial channels 30 are realized between the radial webs 28. The radial channels 30 extend in each case in the peripheral direction over approximately 180°. In the case of a preferred development where three support regions 26 are provided, three radial webs 28 are preferably also realized and are aligned with the support regions 26 in the radial direction. Three radial channels 30 which extend in each case over approximately 120° are then provided for this case.

As can be seen in Fig. 3, the cross section of the radial channels 30 is enlarged when viewed in the radial direction outward, as is shown at reference 32. The joining surface 20, for this purpose, can be inclined at an angle with reference to the virtual base plane 24 in the region of the radial channels 30, it being possible for the angle to be, for example, within the range of between 0.1° and 30°, preferably between 0.5° and 20°, in particular between 1° and 5°.

The angle of inclination is shown schematically in Fig. 3 at reference 34.

The fastening element 10 also comprises a central axial recess 36 in the region of the joining surface 20 such that the joining surface 20 is realized as a ring-shaped surface. In an alternative embodiment, the radial channels 30 could also be realized such that they become larger in cross section in the radial direction inward.

As a result of the inclined joining surface 20 in the region of the radial channels 30 or the cross section of the radial channels 30 which expands in the radial direction 32 (or in the opposite direction), the following is able to be achieved. When the joining portion 14 is heated to carry out a thermoplastic joining operation, the joining portion 14 melts. The fastening element 10 is placed onto a workpiece 40 which comprises a workpiece surface 41 that is adapted to the joining surface. An axial force F is exerted onto the fastening element 16 (Fig. 2). Here, the material of the joining portion 14, which melts during the course of the joining process, is pressed away in the radial direction 32 outward as a result of the conical or expanding shape of the radial channels 30. As a result, air bubbles enclosed therein are also transported in the radial direction outward such that the subsequently finished joint is able to be realized substantially free of air bubbles.

As a result of the support regions 26, it is additionally ensured during the joining process that the fastening element 10 is able to be aligned precisely with reference to the workpiece surface 41 at least at the start of the joining operation.

The workpiece 40 is also preferably produced from a thermoplastic plastics material, preferably a plastics material which comprises a similar grid structure as the thermoplastic material of the fastening element 10, at least in the region of the workpiece surface 41. This makes it possible that, when the joining portion 14 is melted, the workpiece surface 41 is also melted correspondingly and the materials of the workpiece 40 and of the fastening element 10 are mixed together in order to set up a positive bonding thermoplastic joint in this manner when the joining process is concluded by terminating the heating and the overall thermoplastic molten mass solidifies.

In the case of said embodiment, the radial channels 30 are formed by respective inclined portions of the joining surface 20. However, it is obvious that the radial channels can also be realized in a joining surface as radial indentations. In addition, it is possible to develop the radial channels as a result of a toothing-like geometry of the joining surface. In each case, it is preferred when the cross section of the radial channels increases in the radial direction, preferably radially outward.

The fastening element 10 can also be realized without a central recess 36. The radial channels can be formed, as shown, by radial webs. The axial height of the axial webs 28 can be lower than that of the support regions 26, as is shown in Fig. 2. However, the axial height of the axial webs 28 can also be substantially identical to the axial height of the support regions 26, the radial webs 28 can be part of the support regions 26 or form the support regions 26.

The support regions 26, in the present case, are shown as small surface portions which have an entire surface which is smaller than 1/10 of the entire joining surface. The support regions 26, however, can also be realized in a linear manner or in a punctiform manner. As explained above, the support regions 26 can also be formed by radial webs 28 which at the same time serve for defining the radial channels 30.

Although only two support regions 26 are shown in Figs. 1 to 3, it is obvious that the support portion 22 preferably comprises three or more support regions 26 which are arranged distributed over the periphery of the joining surface 20. In many cases, however, one support region 26 could also be enough, for example one central support region 26.

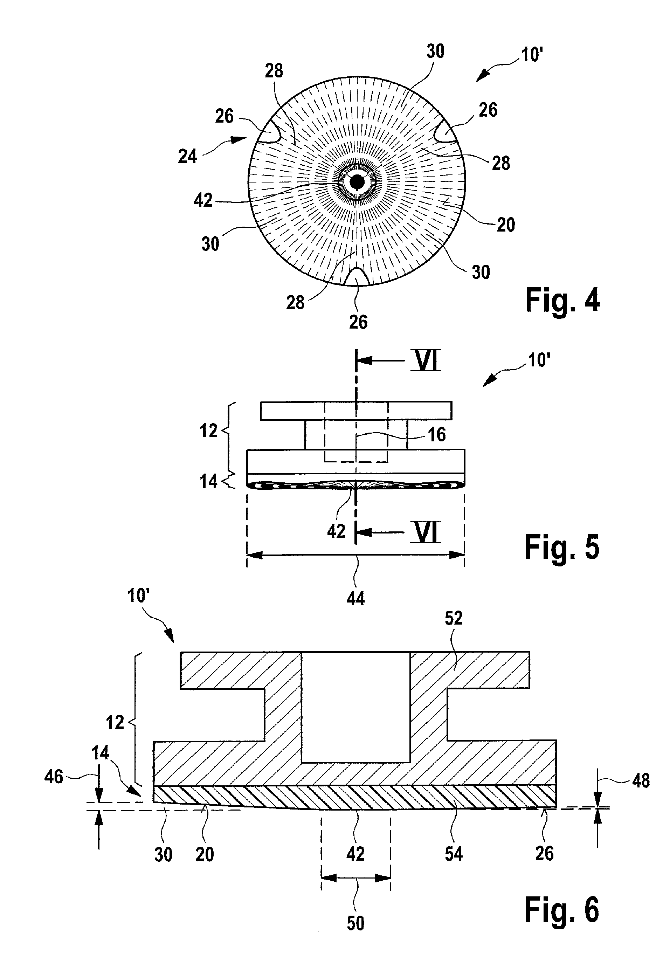

Figs. 4 to 6 show a further embodiment of a fastening element 10' which with regard to design and method of operation corresponds in general to the fastening element 10 of Figs. 1 to 3. Identical elements are consequently named by identical references. The differences essentially are explained below.

As can be seen in Fig. 4, the fastening element 10' comprises a joining surface 20 on which three support regions 26 are realized. The three support regions 26 are arranged in each case in the region of an outer circumference of the joining surface 20 and, when viewed over the circumference, are at uniform spacings from one another. The support regions 26 are small in each case with reference to the entire surface of the joining surface 20. As shown, the support regions 26 in the top view in Fig. 4 can be realized in each case in an approximately triangular manner.

When viewed in the circumferential direction, the joining surface 20 is realized in a circumferentially wave-shaped manner, as can be seen in particular in Fig. 5. The wave shape of the joining surface is additionally conical, to the effect that the wave depth is smaller radially inward than radially outward, as can be seen in Fig. 6. As a result of said realization, radially extending wave peaks and radially aligned wave troughs are formed. The wave troughs, in this connection, form the radial channels 30. The wave peaks delimit the radial channels 30 from one another in the circumferential direction.

As a result of said wave form, a continuous flow of fluid (be it molten thermoplastic plastics material or inclusions of air) in the radial direction to the outside can be achieved without dead corners or the like being formed. Inclusions of air in the region of the joining surface can be substantially excluded as a result.

As can be seen in Figs. 4 and 6, the joining surface 20 comprises a central portion 42, the axial height of which is aligned approximately with the wave peaks of the joining surface 20. The central portion 42 is preferably circular and preferably comprises a substantially even surface which is aligned parallel to a virtual base plane 24.

The joining surface 20 comprises a diameter 44. The maximum axial depth 46 of the radial channels 30 (see Fig. 6) is smaller than 1/10 of the diameter 40.

In addition, an unevenness dimension is shown in Fig. 6 with the reference 48 by which the central portion 42 is set back in the axial direction in relation to the support regions 26. As a result, it is ensured that the fastening element 10' contacts the workpiece always by way of the support regions 26 when it is placed onto the workpiece.

The diameter of the central portion 42 is designated in Fig. 6 with the reference 50. The diameter 50 is smaller than 1/5 of the diameter 44 of the joining surface 20.

As is additionally shown in Fig. 6, the fastening element 10' can be formed by a basic part 52 and a joining part 54. The joining part 54 includes a thermoplastic material which is preferably penetrated by an inductively heatable material, for example in the form of a perforated plate or in the form of embedded metal particles. The basic part 52 can also be produced from plastics material, but can also be produced from another material.

## Claims

1. Fastening element (10) which is joinable, in particular is thermoplastically weldable, onto a surface (41) of a workpiece (40), said fastening element having a fastening portion (12) for fastening an object and having a joining portion (14) for joining the fastening element (10) onto the workpiece surface (41), wherein the joining portion (14) comprises a joining axis (16) and a joining surface (20) which is aligned transversely hereto and can be placed onto the workpiece surface (41) for joining,
**characterized in that** the joining surface (20) comprises at least one support portion (22) which juts out in relation to a base plane (24) which extends transversely with respect to the joining axis (16) such that the support portion (22) is able to contact the workpiece surface (41) when placed in position, and wherein the joining surface (20) comprises at least one radial channel (30) which is realized for the purpose of guiding fluid in the radial direction (32) during the joining operation.

2. Fastening element according to Claim 1, **characterized in that** the support portion (22) comprises at least three support regions (26) which are arranged distributed over a periphery of the joining surface (20).

3. Fastening element according to Claim 1 or 2, **characterized in that** a cross section of the radial channel (30), when viewed in a radial direction (32), expands such that fluid is able to flow in said radial direction (32) when the fastening element (10) and the workpiece (40) are pressed together.

4. Fastening element according to one of Claims 1 - 3, **characterized in that** the joining surface (20) is a circular surface which comprises a central portion (42) which lies at an axial height as the support portion (22) or which is set back axially in relation to the support portion (22).

5. Fastening element according to Claim 4, **characterized in that** the central portion (42) is set back axially by an unevenness dimension (48) in relation to the support portion (22).

6. Fastening element according to one of Claims 1 - 3, **characterized in that** the joining surface (20) is a ring-shaped surface.

7. Fastening element according to one of Claims 1 - 6, **characterized in that** the radial channel (30) is wave-shaped at least in portions in the peripheral direction.

8. Fastening element according to one of Claims 1 - 7, **characterized in that** the joining surface (20) comprises a diameter (44), wherein the radial channel (30) comprises an axial depth (46), and wherein a ratio of the axial depth (46) of the radial channel (30) to the diameter (44) of the joining surface (20) is less than 0.1, in particular less than 0.05.

9. Fastening element according to one of Claims 1 - 8, **characterized in that** the fastening element (10) is produced at least in the region of the joining portion (14) from a plastics material.

10. Method for joining a fastening element (10) onto a workpiece (40), wherein the fastening element (10) and/or the workpiece (40) are produced at least in portions from a thermoplastic plastics material which is heated during the joining process, wherein the fastening element (10) is a fastening element according to one of Claims 1 - 9 which is pressed against the workpiece (40) during the joining process.
